# EUROPÄISCHE PATENTSCHRIFT

(11) **EP 1 934 076 B1**
(45) Veröffentlichungstag und Bekanntmachung des Hinweises auf die Patenterteilung: **18.02.2009**
(21) Anmeldenummer: 06793930.6
(22) Anmeldetag: 29.09.2006
(51) Int. Cl.: B60T 8/40, B60T 13/72, B60T 13/24, B60T 13/565

(54) **BREMSSYSTEM FÜR KRAFTFAHRZEUGE**
BRAKING SYSTEM FOR MOTOR VEHICLES
SYSTEME DE FREINAGE POUR VEHICULES AUTOMOBILES

(30) Priorität: 07.10.2005 DE 102005048439; 07.06.2006 DE 102006026435
(43) Veröffentlichungstag der Anmeldung: 25.06.2008
(73) Patentinhaber: Continental Teves AG & Co. oHG, 60488 Frankfurt (DE)
(72) Erfinder: SCHIEL, Lothar, 65719 Hofheim (DE); DRUMM, Stefan A., 55291 Saulheim (DE)
(86) Internationale Anmeldenummer: PCT/EP2006/066917
(87) Internationale Veröffentlichungsnummer: WO 2007/042413

(56) Entgegenhaltungen:
- EP-A2- 0 379 329
- DE-A1- 3 625 960
- GB-A- 2 000 564
- GB-A- 2 200 419

## Beschreibung

Die vorliegende Erfindung betrifft ein Bremssystem für Kraftfahrzeug-Bremsanlagen, das
- einen ersten Hauptbremszylinder mit mindestens einem hydraulischen Druckraum, der durch einen Hauptzylinderkolben begrenzt ist und an den mindestens ein Radbremskreis angeschlossen ist,
- eine dem Hauptbremszylinder vorgeschaltete Ansteuerungs- bzw. Betätigungsanordnung, in deren Gehäuse ein Steuerkolben geführt wird, der mit einem Bremspedal gekoppelt ist,
- sowie einen abseits vom Hauptbremszylinder angeordneten pneumatisch-hydraulischen Bremskraftverstärker aufweist,
- in dem zwei pneumatische Verstärkerkammern ausgebildet sind, die durch eine bewegliche Wand voneinander getrennt sind und bei Bremsbetätigung an Quellen unterschiedlichen Druckes durch ein Steuerventil anschließbar sind, das durch die Bewegung des Steuerkolbens hydraulisch betätigbar ist,
- und wobei dem Bremskraftverstärker ein zweiter Hauptbremszylinder nachgeschaltet ist, dessen Kolben mit der beweglichen Wand in kraftübertragender Verbindung steht und einen zweiten Druckraum begrenzt, dessen Druck bremskraftverstärkend auf den ersten Hauptzylinderkolben wirkt.

In der Kraftfahrzeugtechnik finden "brake-by-wire"-Bremssysteme eine immer größere Verbreitung. Bei diesen Bremssystemen kann die Bremse einerseits ohne aktives Zutun des Fahrzeugführers aufgrund elektronischer Signale "fremd-"betätigt werden. Diese elektronischen Signale können beispielsweise von einem elektronischen Stabilitätsprogramm ESP oder einem Abstandsregelsystem ACC ausgegeben werden. Andererseits kann auf eine Betätigung des Bremssystems ganz oder teilweise verzichtet werden, wenn eine vom Fahrzeugführer über eine Bremspedalbetätigung angeforderte Bremswirkung beispielsweise durch Umschalten eines elektrischen Fahrzeugantriebs in einen Generatorbetrieb erzielt wird. In beiden Fällen entspricht der Betätigungszustand der Bremse nicht der vom Fahrzeugführer vorgegebenen Bremspedalbetätigung. Bei herkömmlichen Bremssystemen führt dies zu einer Rückwirkung auf das Bremspedal. Die Bremspedalcharakteristik - d.h. die Abhängigkeit des Bremspedalwegs von der Bremspedalkraft ist durch die beschriebene Rückwirkung gestört. Dieser Rückwirkungseffekt auf das Bremspedal kann für den Fahrer überraschend und unangenehm sein, so dass der Fahrer in einer kritischen Situation des Straßenverkehrs das Bremspedal nicht in einem dieser Situation angepassten Maße betätigt, da er durch die für ihn nicht vorhersehbare Rückwirkung auf das Bremspedal irritiert wird.

Ein Bremssystem der eingangs genannten Gattung ist aus der GB 2200419 A bekannt. Als nachteilig wird bei dem vorbekannten Bremssystem die Tatsache empfunden, dass es für Anwendungen der "brake-by-wire"-Betriebsart nicht verwendet werden kann. Weiterhin wird bei dem vorbekannten Bremssystem die Tatsache als nachteilig empfunden, dass der vom Bremskraftverstärker bereit gestellte Verstärkungsdruck über den Ventilkolben des Steuerventils sowie die zugeordnete hydraulische Steuerleitung auf den Steuerkolben sowie das mit dem Steuerkolben gekoppelte Bremspedal übertragen wird, so dass das dem Fahrzeugführer vermittelte Pedalgefühl beeinträchtigt werden kann.

Es ist daher Aufgabe der vorliegenden Erfindung, ein Bremssystem der eingangs genannten Gattung vorzuschlagen, das für Anwendungen der "brake-by-wire"-Betriebsart geeignet ist. Außerdem soll dem Fahrzeugführer in jeder Betriebsart das gleiche, angenehme Pedalgefühl vermittelt werden.

Diese Aufgabe wird erfindungsgemäß dadurch gelöst, dass
a) elektromechanische Mittel zur vom Fahrerwillen unabhängigen Ansteuerung des Steuerventils vorgesehen sind, und dass
b) im Gehäuse der Ansteuerungs- bzw. Betätigungsanordnung ein "zweiter" Betätigungskolben sowie ein "dritter" (Rückhalte-) Kolben einen mit dem im zweiten Druckraum eingesteuerten Druck beaufschlagbaren Zwischenraum begrenzen, wobei die Druckbeaufschlagung des Zwischenraums den Betätigungskolben und den dritten (Rückhalte-)kolben in entgegen gesetzten Richtungen belastet, wobei
c) der Betätigungskolben mit dem Hauptzylinderkolben in kraftübertragender Verbindung steht und der Steuerkolben im dritten Kolben geführt ist, und wobei
d) ein Pedalwegsimulator vorgesehen ist, der durch die Bewegung des Steuerkolbens betätigbar ist.

### Weitere vorteilhafte Ausführungen des erfindungsgemäßen

Bremssystems sind in den Unteransprüchen 2 bis 23 aufgeführt.

Die vorliegende Erfindung wird nachfolgend an zwei Ausführungsbeispielen unter Bezugnahme auf die beiliegende Zeichnung näher erläutert, wobei die gleichen Komponenten mit den gleichen Bezugszeichen versehen sind. In der Zeichnung zeigen:
Fig. 1 den Aufbau einer ersten Ausführung des erfindungsgemäßen Bremssystems;
Fig. 2 eine Schnittdarstellung der Betätigungs- und Ansteuerungseinrichtung in einer gegenüber Fig. 1 um 30° gedrehten Schnittebene;
Fig. 3a eine Schnittdarstellung des bei der ersten Ausführung des in Fig. 1 gezeigten Bremssystems verwendeten Steuerventils des Bremskraftverstärkers;
Fig. 3b eine Schnittdarstellung einer zweiten Variante des Steuerventils des Bremskraftverstärkers;
Fig. 4a und 4b jeweils eine vergrößerte Schnittdarstellung einer zweiten Variante des Bremskraftverstärkers in evakuiertem bzw. belüftetem Zustand, wobei der Bremskraftverstärker ein Steuerventil gemäß Fig. 3b aufweist und
Fig. 5 den Aufbau einer zweiten Ausführung des erfindungsgemäßen Bremssystems.

Das in der Zeichnung dargestellte erfindungsgemäße Bremssystem besteht im Wesentlichen aus einer Ansteuerungs- bzw. Betätigungseinrichtung 1, einem koaxial zur Ansteuerungs- bzw. Betätigungseinrichtung 1 angeordneten ersten hydraulischen Hauptbremszylinder bzw. Tandemhauptzylinder 2, sowie einem vom Hauptbremszylinder 2 räumlich getrennt angeordneten Bremskraftverstärker 3 mit einem dem Bremskraftverstärker 3 wirkungsmäßig nachgeschalteten zweiten Hauptbremszylinder 36. Eine hydraulische Steuerleitung 49 verbindet die Ansteuerungs- bzw. Betätigungseinrichtung 1 mit einem pneumatischen Steuerventil 40 des Bremskraftverstärkers 3, während der zweite Hauptbremszylinder 36 mit der Ansteuerungs- bzw. Betätigungseinrichtung 1 mittels einer Druckleitung 50 verbunden ist. Die in der Zeichnung abgebildete achsparallele Anordnung des Hauptbremszylinders 2 und des Bremskraftverstärkers 3 ist nicht zwingend. Es ist beispielsweise möglich, dass der Hauptbremszylinder 2. mit der Ansteuerungs- bzw. Betätigungseinrichtung 1 im Motorraum eines Kraftfahrzeugs etwa parallel zu dessen Längsachse angeordnet ist, während sich die Achse des Bremskraftverstärkers 3 mit dem zweiten Hauptbremszylinder 36 in einem mehr oder weniger großen seitlichen Abstand vom Hauptbremszylinder 2 parallel zur Hochachse des Kraftfahrzeugs erstreckt.

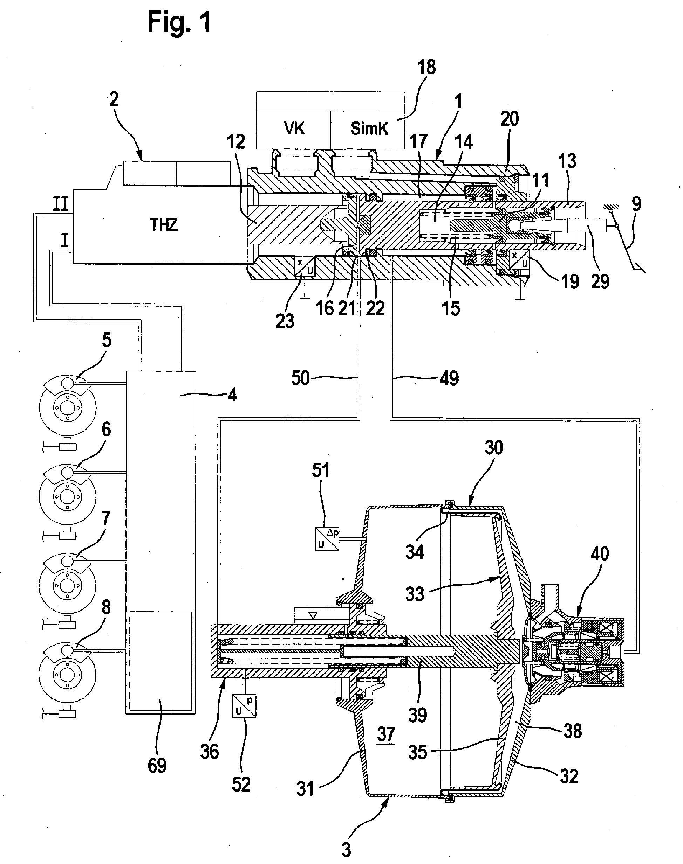

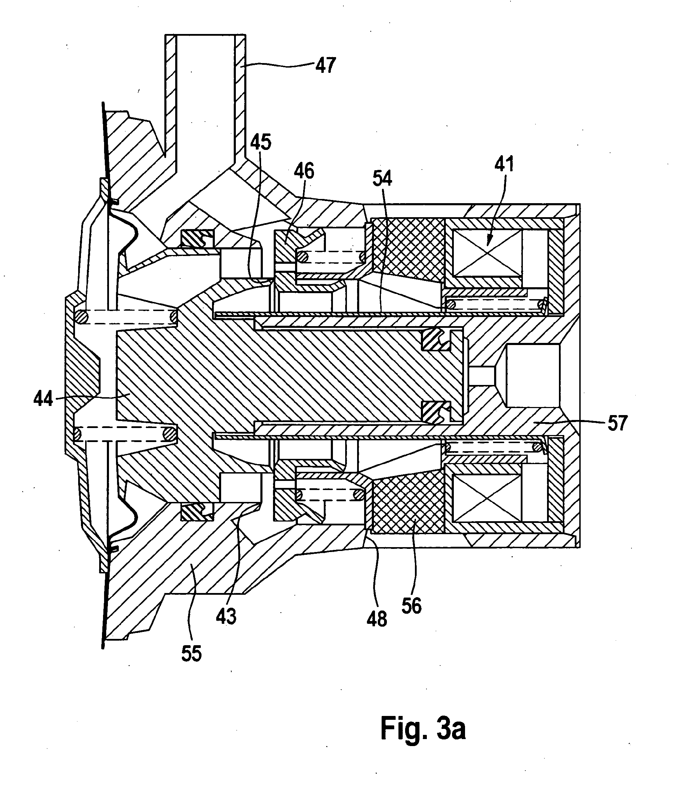

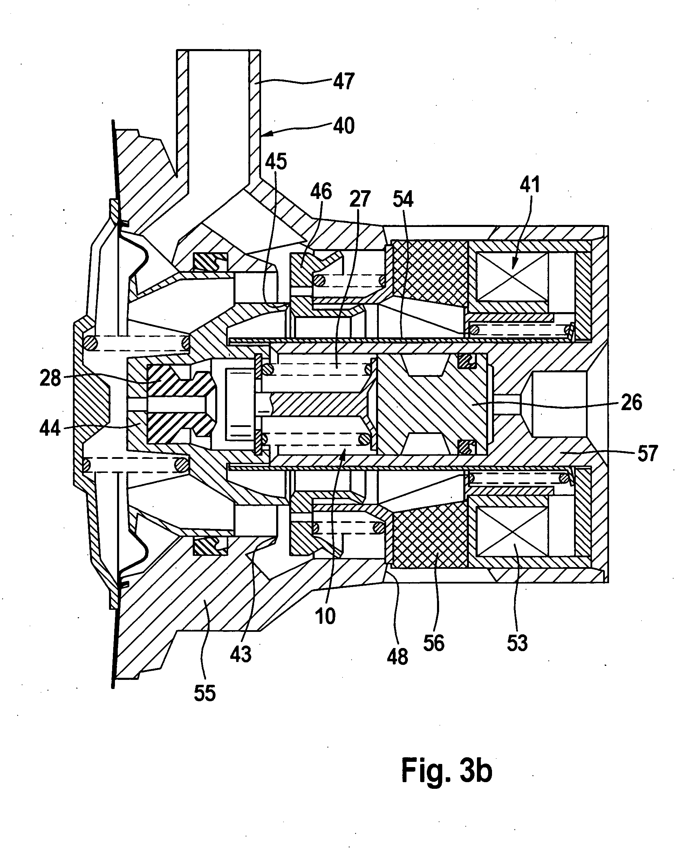

Der Bremskraftverstärker 3 weist ein zweiteiliges Gehäuse aus Blech mit einer vorderen Schale 31 und einer hinteren Schale 32 auf, die an ihrem äußeren Rand miteinander fest verbunden sind und den äußeren Rand einer Rollmembran 34 zwischen sich eingespannt halten. Die Rollmembran 34 gehört zu einer beweglichen Wand 33, die einen zentralen starren Membranteller 35 aufweist und die zwei pneumatische Verstärkerkammern 37 und 38 voneinander trennt. Diese werden im Folgenden entsprechend der Darstellung in Fig. 1 als vordere Verstärkerkammer bzw. Vakuumkammer 37 und hintere Verstärkerkammer bzw. Arbeitskammer 38 bezeichnet, ohne dass damit eine andere Anordnung ausgeschlossen werden soll. Entsprechendes gilt auch für Bauteile, die den Verstärkerkammern 37 und 38 zugeordnet sind. Das vorhin erwähnte Steuerventil 40, dessen Aufbau im Zusammenhang mit Fig. 3 erläutert wird, ermöglicht ein wahlweises Beaufschlagen der Arbeitskammer 38 mit Unterdruck oder einer pneumatischen Druckdifferenz zwischen dem Unterdruck der Arbeitskammer 38 und einem in der Arbeitskammer 38 partiell eingesteuerten Atmosphärendruck. Es können pneumatische Drucksensoren vorgesehen sein, für die Drücke der Arbeitskammer 38, der Vakuumkammer 37 oder die Druckdifferenz zwischen beiden. Exemplarisch ist in Fig. 1 ein Drucksensor 51 zur Ermittlung des Drucks in der Vakuumkammer 37 dargestellt. Mit der beweglichen Wand 33 steht ein hydraulischer Hauptzylinderkolben 39 in kraftübertragender Verbindung, durch dessen Verschiebung in der Zeichnung nach links im zweiten Hauptbremszylinder 36 ein hydraulischer Verstärkungsdruck aufgebaut wird, der mittels der vorhin genannten Druckleitung 50 der Ansteuerungs- bzw. Betätigungseinrichtung 1 zugeführt wird. Dem Erfassen des Verstärkungsdrucks dient ein Drucksensor 52.

Außerdem ist Fig. 1 zu entnehmen, dass an die nicht dargestellten Druckräume des ersten Hauptbremszylinders 2 Radbremskreise I, II angeschlossen sind, die unter Zwischenschaltung eines bekannten ABS/ESP-Hydroaggregats bzw. eines steuerbaren Radbremsdruckmodulationsmoduls 4 Radbremsen 5 - 8 eines Kraftfahrzeuges mit.hydraulischem Druckmittel versorgen. Dem Radbremsdruckmodulationsmodul 4 ist eine elektronische Steuer- und Regeleinheit 69 zugeordnet. Die Ansteuerungs- bzw. Betätigungseinrichtung 1, die in einem Gehäuse 20 angeordnet ist, an das der Tandemhauptzylinder 2 angeschlossen ist, ist über ein Bremspedal 9 ansteuerbar, das über eine Betätigungsstange 29 mit einem Steuerkolben 11 der Betätigungseinrichtung 1 wirkungsmäßig verbunden ist. Der Betätigungsweg des Bremspedals 9 wird mittels eines Wegsensors 19 erfasst, der den Weg des Steuerkolbens 11 sensiert. Zum gleichen Zweck kann jedoch auch ein nicht dargestellter Drehwinkelsensor verwendet werden, der den Drehwinkel des Bremspedals 9 erfasst. Der Steuerkolben 11 ist in einem Rückhaltekolben 13 angeordnet, in dem er eine Druckkammer 14 begrenzt, die eine Druckfeder 15 aufnimmt, die bei unbetätigtem Bremspedal 9 den Steuerkolben 11 zur Anlage am Rückhaltekolben 13 bringt. Alternativ oder zusätzlich kann im Bereich der Druckstange 29 oder des Bremspedals 9 eine Pedalrückstellfeder vorgesehen sein. Die Druckkammer 14, deren Funktion später erläutert wird, ist in unbetätigtem Zustand der Betätigungseinrichtung 1 mit einem zweiten Druckmittelvorratsbehälter 18 verbunden. Der Rückhaltekolben 13 wirkt mit einem Primärkolben 12 des Tandemhauptzylinders 2 zusammen, wobei im dargestellten Beispiel zwischen dem Primär-(12) und dem Rückhaltekolben 13 ein Druckübersetzungskolben 16 angeordnet ist. Zwischen dem Rückhaltekolben 13 und dem Druckübersetzungskolben 16 ist ein Zwischenraum 21 begrenzt, der an die Druckleitung 50 angeschlossen ist und durch dessen Beaufschlagen mit einem hydraulischen Druck der Rückhaltekolben 13 an einem im Gehäuse 20 ausgebildeten Anschlag 22 gehalten wird, während der Druckübersetzungskolben 16 und damit der Primärkolben 12 des Tandemhauptzylinders 2 im Sinne eines Druckaufbaus im Tandemhauptzylinder 2 beaufschlagt werden. Eine aus dieser Belastung resultierende Bewegung des Übersetzungskolbens 16 wird mittels eines zweiten Wegsensors 23 erfasst. Außerdem begrenzt der dritte Kolben 13 im Gehäuse 20 eine hydraulische Kammer 17, deren Funktion ebenfalls im nachfolgenden Text erläutert wird.

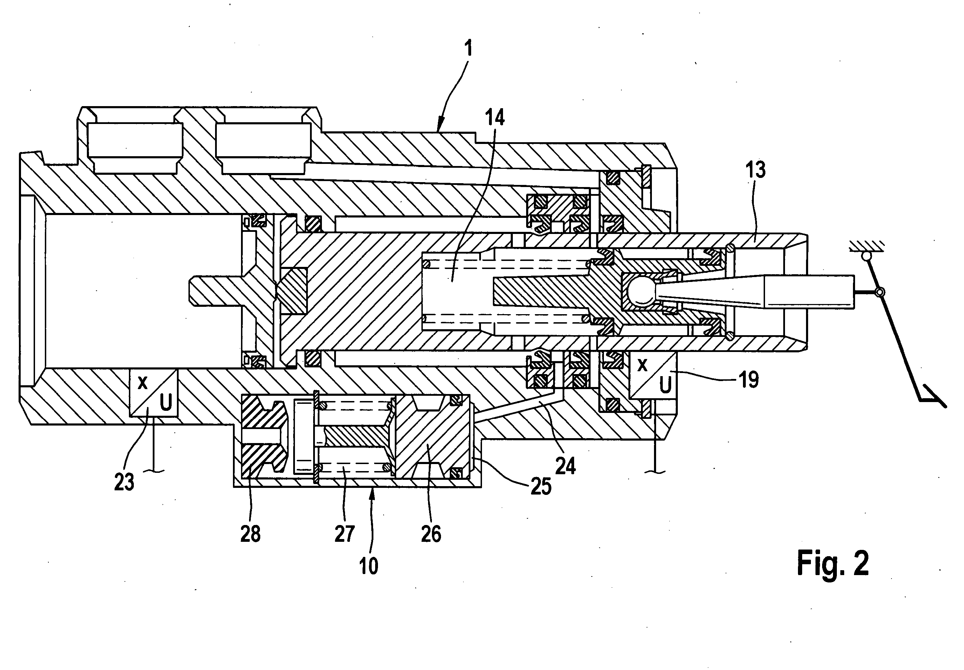

Wie insbesondere Fig. 2 zu entnehmen ist, steht die vorhin erwähnte Druckkammer 14 über eine absperrbare Verbindungsleitung 24 mit einer Simulatorkammer 25 in Verbindung, die von einem Simulatorkolben 26 begrenzt wird. Dabei wirkt der Simulatorkolben 26 mit einer Simulatorfeder 27 sowie einer der Simulatorfeder 27 parallel geschalteten. Elastomerfeder 28 zusammen. Dabei bilden die Simulatorkammer 25, der Simulatorkolben 26, die Simulatorfeder 27 sowie die Elastomerfeder 28 einen Pedalwegsimulator 10, der dem Fahrzeugführer bei der Betätigung des Bremssystems das gewohnte Pedalgefühl vermittelt, das einer üblichen Bremspedalcharakteristik entspricht. Dies bedeutet, dass bei geringem Bremspedalweg der Widerstand langsam ansteigt und bei größerem Bremspedalweg überproportional zunimmt. Zur Dämpfung der Bewegung des Simulatorkolbens 26 können nicht dargestellte hydraulische und pneumatische Dämpfungsmittel vorgesehen sein. Die hydraulische Verbindungsleitung 24 zwischen der Simulatorkammer 25 und der Druckkammer 14 bzw. dem ersten Druckmittelvorratsbehälter 18 wird durch eine Bewegung des Rückhaltekolbens 13 in Betätigungsrichtung des Hauptbremszylinders 2 abgesperrt, wodurch der Pedalwegsimulator 10 wirkungsmäßig abgeschaltet wird.

Wie aus Fig. 3a, b erhellt, besteht das pneumatische Steuerventil 10 im Wesentlichen aus einem Steuergehäuse 55, einem ersten bzw. Unterdruckdichtsitz 43, einem zweiten bzw. Atmosphärendichsitz 45 sowie einem mit den Dichtsitzen 43, 45 zusammenwirkenden Ventilkörper 46. Das Steuergehäuse 55 weist einen Unterdruckanschluss 47 sowie einen Atmosphärenanschluss 48 auf, die dem Beaufschlagen der Dichtsitze 43, 45 mit einem von einer nicht dargestellten Unterdruckquelle zur Verfügung gestellten Unterdruck sowie dem Atmosphärendruck dienen. Der erstgenannte Unterdruckdichtsitz 43 ist im Inneren des Steuergehäuses 55 ausgebildet, während der Atmosphärendichtsitz 45 an einem Ventilkolben 44 ausgebildet ist, der entweder direkt (s. Fig. 3a) oder indirekt (s. Fig. 3b) mit dem hydraulischen Ansteuerdruck beaufschlagt wird, der durch Verschieben des vorhin erwähnten Steuerkolbens 11 aufgebaut wird. Um das Steuerventil 40 unabhängig von der Ansteuerung durch den Steuerkolben 11 durch eine "Fremd"-Betätigungskraft betätigen zu können sind im Steuergehäuse 55 elektromechanische Mittel 41 bzw. 53, 54 vorgesehen, die durch einen Elektromagneten gebildet sind, dessen Spule 53 unbeweglich im Steuergehäuse 55 angeordnet ist, während dessen Anker 54 mit dem Ventilkolben 44 in kraftübertragender Verbindung steht. Der vorhin erwähnte Atmosphärenanschluss 48 ist durch mehrere radiale Öffnungen im Steuergehäuse 55 gebildet, in deren Bereich im Steuergehäuse 55 ein Luftfilter 56 angeordnet ist. Der Zufuhr des unter dem Ansteuerdruck stehenden hydraulischen Druckmittels zum Steuerventil 40 dient ein hydraulischer Anschluss 57, auf dem bei beiden Ausführungen des Steuerventils 40 der Anker 54 des Elektromagneten 41 geführt wird. Außerdem dient der Anschlußß 57 bei der in Fig. 3a gezeigten Ausführung der Führung des Ventilkolbens 44.

Wie insbesondere in Fig. 3b zu erkennen ist, erfolgt die Übertragung des Ansteuerdruckes auf den Ventilkolben 44 über den Pedalwegsimulator 10, dessen der Fig. 2 entsprechenden Teile mit den gleichen Bezugszeichen versehen sind. Bei der in Fig. 3b dargestellten Ausführung des Steuerventils 40 ist der Pedalwegsimulator 10 jedoch nicht abschaltbar. Die beiden in Fig. 3a, b gezeigten Varianten des Steuerventils 40 bilden eigenständige Baugruppen, die mit Verstärkergehäusen verschieneder Baugrößen kombinierbar sind. Dabei ist es wesentlich, dass die im Zusammenhang mit Fig. 1 erwähnte bewegliche Wand 33 des Bremskraftverstärkers 3 keine kraftübertragende Verbindung mit dem Steuergehäuse 55 der beiden Steuerventilvarianten gemäß Fig. 3a und 3b aufweist.

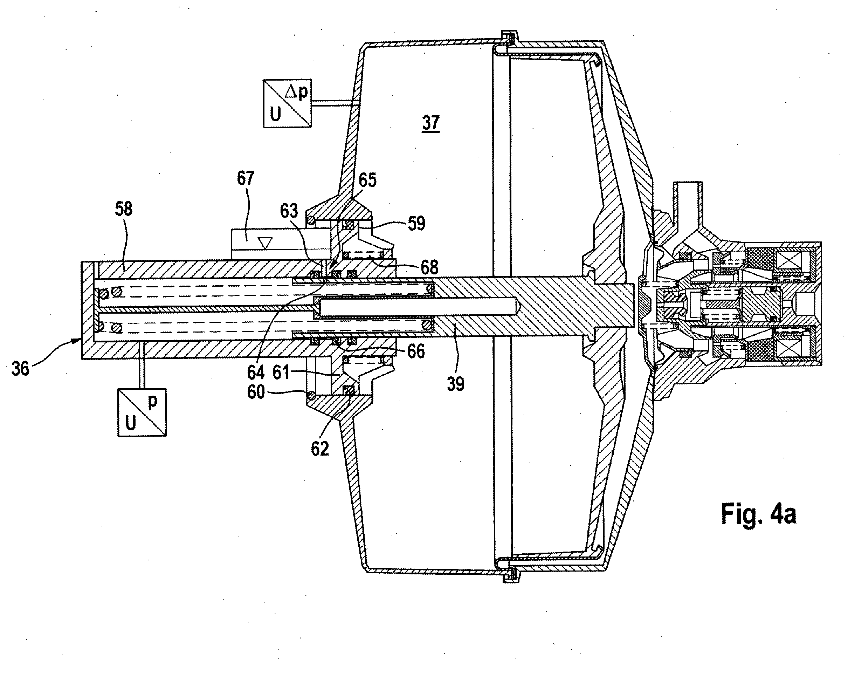

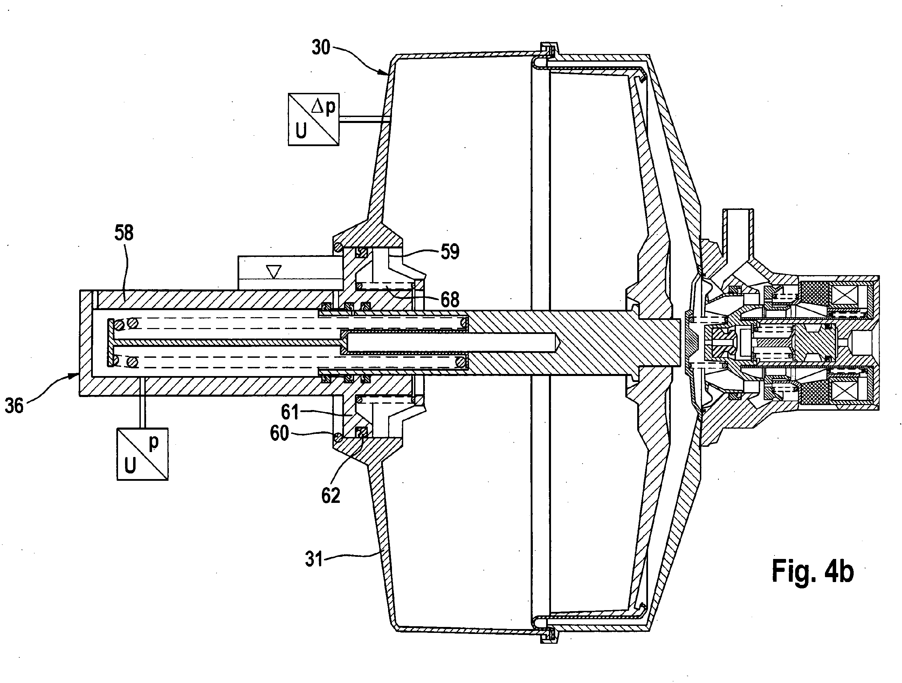

Aus der in Fig. 4a, b dargestellten Ausführung des pneumatischen Bremskraftverstärkers 3 sowie des ihm nachgeschalteten zweiten Hauptbremszylinders 36 ist ersichtlich, dass das Gehäuse 58 des zweiten Hauptbremszylinders 36 in der vorderen Hälfte 31 des Bremskraftverstärkergehäuses 30 beweglich angeordnet ist. Die Bewegung des zweiten Hauptbremszylinders 36 wird durch zwei lediglich schematisch angedeutete Anschläge 59, 60 begrenzt. Dabei bildet ein mit dem Gehäuse 58 des zweiten Hauptbremszylinders 36 einteilig ausgebildeter, radialer Flansch 61 mit seinem Dichtelement 62 einen pneumatischen Kolben, der einerseits mit dem in der Unterdruckkammer 37 herrschenden pneumatischen Druck und andererseits mit dem außerhalb des Verstärkergehäuses 30 herrschenden atmosphärischen Druck beaufschlagt wird. Durch die Wirkung der gerade erläuterten pneumatischen Druckdifferenz entsteht eine in der Zeichnung nach rechts gerichtete Kraft, die den Flansch 61 am rechts gezeichneten Anschlag 59 hält. Ein Federelement 68, im gezeigten Beispiel eine Druckfeder, wirkt mit seiner Federkraft gegen die erwähnte Kraft. Der beschriebene Zustand ist in Fig. 4a dargestellt. Fig. 4a, b ist weiterhin zu entnehmen, dass der zweite Hauptbremszylinder 36 mit einer Ventilanordnung 65 versehen ist, die seinen Druckraum mit einem unter atmosphärischem Druck stehenden Druckmittelvorratsbehälter 67 verbindet bzw. diese Verbindung absperrt. Die Verbindung erfolgt mittels im Gehäuse 58 sowie im Hauptzylinderkolben 39 ausgebildeter radialer Bohrungen oder Durchlässe 63, 64, wobei die Ventilanordnung durch den im Hauptzylinderkolben 39 ausgebildeten Durchlass 64 und ein im Gehäuse 58 des zweiten Hauptbremszylinders 36 angeordnetes Dichtelement 66 gebildet ist.

In dem in Fig. 4b gezeigten Zustand, in dem in der Unterdruckkammer 37 des Bremskraftverstärkers 3 der atmosphärische Druck herrscht und der Flansch 61 des zweiten Hauptbremszylinders 36 pneumatisch druckausgeglichen ist, wird der Flansch 61 durch die Vorspannung des Federelementes 68 am Anschlag 60 gehalten. Während der Bewegung des zweiten Hauptbremszylinders 36'in der Zeichnung nach links wird das Dichtelement 62 von dem im Hauptzylinderkolben 39 ausgebildeten Durchlass 64 überfahren und somit die Verbindung des Druckraums des zweiten Hauptbremszylinders 36 mit dem Druckmittelvorratsbehälter 67 abgesperrt.

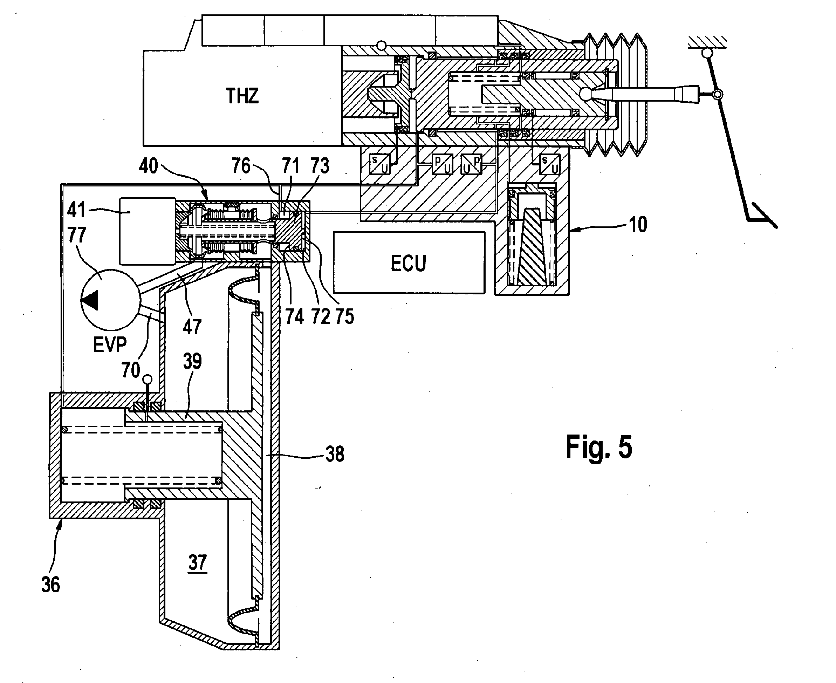

Bei der in Fig. 5 dargestellten zweiten Ausführung des erfindungsgemäßen Bremssystems ist das pneumatische Steuerventil 40 außerhalb der Längsachse des Bremskraftverstärkers 3 und beispielsweise, aber nicht notwendigerweise parallel zu dieser Achse angeordnet. Der vorhin erwähnte pneumatische Unterdruckanschluss 47 ist mit der Unterdruckkammer 37 des Bremskraftverstärkers 3 und einer Vakuumpumpe 77 verbunden. Wie Fig. 5 außerdem entnehmbar ist, erfolgt die hydraulische Ansteuerung des Steuerventils 40 mittels einer Anordnung, die durch einen ersten Druckraum 71, einen zweiten Druckraum 72 sowie einen die Druckräume 71, 72 voneinander trennenden Stufenkolben 73 gebildet wird. Dabei ist der erste Druckraum 71 als ein Ringraum ausgebildet, der von der Ringfläche 74 des Stufenkolbens 73 begrenzt wird, während der zweite Druckraum 72 von der Fläche 75 des Stufenkolbens 73 mit größerem Querschnitt begrenzt wird. Der erste Druckraum 71 ist über eine erste Druckmittelleitung 76 an die hydraulische Leitung 50 angeschlossen, die den Zwischenraum 21 mit dem zweiten Hauptbremszylinder 36 verbindet. Der zweite Druckraum 72 ist mittels einer zweiten Druckmittelleitung 77 an die Druckkammer 14 angeschlossen und über diese mit dem Druckmittelvorratsbehälter 18 verbindbar. Der im Zusammenhang mit Fig. 1 beschriebene Pedalwegsimulator ist wie bei der ersten Ausführung im Gehäuse 20 der Betätigungs- bzw. Ansteuerungseinrichtung 1 ausgebildet. Die elektromechanischen Mittel 41 bewegen in der zweiten Ausführung des erfindungsgemäßen Bremssystems den Vakuumdichtsitz des Steuerventils 40.

Im nachfolgenden Text wird die Funktionsweise des erfindungsgemäßen Bremssystems im Zusammenhang mit Fig. 1 und 2 näher erläutert.

Der erste Betriebsmodus entspricht einer rein elektrischen, der sog. "Brake-by-wire"-Betriebsart, bei der sämtliche Komponenten des Bremssystems intakt sind und einwandfrei arbeiten. In diesem Modus wird zum Aufbau eines hydraulischen Druckes im Zwischenraum 21 das Steuerventil 40 des Bremskraftverstärkers 3 durch die elektromechanischen Mittel 41, 54 angesteuert, so dass der von dem zweiten Hauptbremszylinder 36 bereit gestellte Druck dem Zwischenraum 21 zugeführt wird. Durch die Druckwirkung werden der Rückstellkolben 13 an dem im Gehäuse 20 ausgebildeten Anschlag 22 gehalten und der Übersetzungskolben 16 unter Mitnahme des Hauptbremszylinderkolbens 12 nach links verschoben, wodurch der Hauptbremszylinder 3 betätigt wird. Zum Zweck des Druckhaltens wird das pneumatische Steuerventil 40 wieder geschlossen.

Für einen Druckabbau wird der Unterdruckdichtsitz 43 des Steuerventils 40 (s. Fig. 3a) geöffnet, wodurch die beiden pneumatischen Kammern 37, 38 des Bremskraftverstärkers 3 miteinander verbunden werden und somit die Arbeitskammer 38 evakuiert wird. Durch die Rückwärtsbewegung des Hauptbremszylinderkolbens 39 strömt Druckmittel aus dem Zwischenraum 21 in den Druckraum des zweiten Hauptbremszylinders 36.

Die Ansteuerung des Steuerventils 40 wird von einer nicht dargestellten elektronischen Steuereinheit derart koordiniert, dass der Druck im Zwischenraum 21 einem Solldruckwert angenähert wird. Dieser Solldruckwert ergibt sich aus einem erfassten Betätigungsgrad des Bremspedals 9, der aus dem Betätigungsweg des Bremspedals 9 bzw. des ersten Kolbens 11 und aus dem hydraulischen Druck in der Druckkammer 14 ermittelt wird, der mittels eines nicht dargestellten Drucksensors erfasst wird und der im Wesentlichen der Betätigungskraft des Bremspedals 9 proportional ist.

In einem zweiten Betriebsmodus, der durch eine Störung der Elektronik charakterisiert ist und einer ersten Rückfallebene entspricht, ist kein elektronisch gesteuerter Druckaufbau im Zwischenraum 21 möglich. Die Betätigung des Steuerventils 40 erfolgt durch eine hydraulische Kraftübertragung vom Betätigungskolben 11 auf den Ventilkolben 44 des Steuerventils 40, wobei wieder die im Verstärkergehäuse 30 herrschende pneumatische Druckdifferenz verwendet wird. Ansonsten erfolgt der Druckaufbau im Zwischenraum 21 wie im ersten Betriebsmodus.

In einem dritten Betriebsmodus, der durch das Fehlen eines vom zweiten Hauptbremszylinder 36 erzeugten Druckes bzw. des für die Funktion des Bremskraftverstärkers 3 notwendigen Unterdrucks charakterisiert ist, kann das Bremssystem rein mechanisch betätigt werden. Der Rückstellkolben 13 bewegt sich unter dem Einfluss einer Bremspedalbetätigung von seinem Anschlag 22 weg und verschiebt den Übersetzungskolben 16 bzw. den Hauptbremszylinderkolben 12 durch mechanischen Kontakt. Die Betätigung des Hauptbremszylinders 2 erfolgt somit ausschließlich mit Muskelkraft des Fahrzeugführers.

In einem vierten Betriebsmodus, der einer Rekuperationsbremsung entspricht, verhindert oder reduziert das Radbremsdruckmodulationsmodul 4 ein Zuspannen der Radbremsen 5, 6, 7, 8 des Kraftfahrzeugs weil die gewünschte Verzögerung des Kraftfahrzeugs sinnvoller durch einen Rekuperationsvorgang, d.h die Umwandlung von Bewegungsenergie des Kraftfahrzeugs in elektrische Energie erfolgt als durch das einfache Vernichten der kinetischen Energie in den Reibungsbremsen. Die vorlegende Erfindung ermöglicht es, solche Rekuperationsbremsungen ohne die im Stand der Technik unvermeidlichen Pedalirritationen durchzuführen.

Durch die vorliegende Erfindung wird eine einfach aufgebaute Bremsanlage erreicht, bei der in einer "Brake-by-wire"-Betriebsart, einer ersten und einer zweiten Rückfallbetriebsart, sowie bei Rekuperationsbremsungen die Bremspedalcharakteristik nicht vom Betätigungszustand der restlichen Bremsanlage abhängt, wodurch das Pedalgefühl bei einer Fahrerbremsung weder durch das gleichzeitige Vorliegen einer Fremdbremsung noch durch andere Regelungsaktivitäten des Bremssystems wie Antiblockierregelung, Traktionskontrolle oder Fahrstabilitätsregelung gestört werden kann.

Die vorgeschlagene Bremssystem hat weiterhin den Vorteil, dass eine elektronische Stabilitätsregelfunktion (ESP) einfacher realisiert werden kann, als in herkömmlichen Bremsanlagen, weil eine spezielle ESP-Hydraulik nicht benötigt wird. Bei Fahrzeugen mit der erfindungsgemäßen Bremsanlage ist eine spezielle ESP-Hydraulik überflüssig - die erfindungsgemäße Fremdbremshydraulik in Verbindung mit einem herkömmlichen ABS-System erbringt eine weit bessere Funktion. Es werden weniger elektromagnetisch betätigbare Ventile.benötigt als für eine herkömmliche ESP-Hydraulik. Außerdem weist die erfindungsgemäße Bremsanlage eine bessere Energiebilanz und eine geringere Geräuschentwicklung auf, als eine herkömmliche ESP-Hydraulik, weil das dort im ESP-Betrieb erforderliche Umpumpen von Bremsflüssigkeit zum Erzeugen von Staudruck an einem Druckbegrenzungsventil entfällt.

## Patentansprüche

1. Bremssystem für Kraftfahrzeug-Bremsanlagen, die
• einen ersten Hauptbremszylinder (2) mit mindestens einem hydraulischen Druckraum, der durch einen Hauptzylinderkolben (12) begrenzt ist und an den mindestens ein Radbremskreis (I, II) angeschlossen ist,
• eine dem Hauptbremszylinder (2) vorgeschaltete Ansteuerungs- bzw. Betätigungsanordnung (1), in deren Gehäuse (20) ein Steuerkolben (11) geführt wird, der mit einem Bremspedal (9) gekoppelt ist,
• sowie einen abseits vom Hauptbremszylinder (2) angeordneten pneumatisch-hydraulischen Bremskraftverstärker (3) aufweist,
• in dem zwei pneumatische Verstärkerkammern (37,38) ausgebildet sind, die durch eine bewegliche Wand (33) voneinander getrennt sind und bei Bremsbetätigung an Quellen unterschiedlichen Druckes durch ein Steuerventil (40) anschließbar sind, das durch die Bewegung des Steuerkolbens (11) hydraulisch betätigbar ist,
• und wobei dem Bremskraftverstärker (3) ein zweiter Hauptbremszylinder (36) nachgeschaltet ist, dessen Kolben (39) mit der beweglichen Wand (33) in kraftübertragender Verbindung steht und einen zweiten Druckraum begrenzt, dessen Druck bremskraftverstärkend auf den ersten Hauptzylinderkolben (12) wirkt, **dadurch gekennzeichnet, dass**
a) elektromechanische Mittel (41,44) zur vom Fahrerwillen unabhängigen Ansteuerung des Steuerventils (40) vorgesehen sind, und dass
b) im Gehäuse (20) der Ansteuerungs- bzw. Betätigungsanordnung (1) ein Rückhaltekolben (13) vorgesehen ist, der mit dem Hauptbremszylinderkolben (12) einen mit dem im zweiten Hauptbremszylinder (36) eingesteuerten Druck beaufschlagbaren Zwischenraum (21) begrenzt, wobei die Druckbeaufschlagung des Zwischenraums (21) den Hauptbremszylinderkolben (12) und den Rückhaltekolben (13) in entgegen gesetzten Richtungen belastet; wobei
c) der Steuerkolben (11) im Rückhaltekolben (13) geführt ist, und wobei
d) ein Pedalwegsimulator (10) vorgesehen ist, der durch die Bewegung des Steuerkolbens (11) betätigbar ist.

2. Bremssystem nach Anspruch 1 **dadurch gekennzeichnet, dass** das Steuerventil (40) ein Steuergehäuse (55) aufweist, das mit einem Unterdruckanschluss (47) sowie einem Atmosphärenanschluss (48) versehen ist.

3. Bremssystem nach Anspruch 1 oder 2 **dadurch gekennzeichnet, dass** die elektromechanischen Mittel (41, 53, 44, 54) durch einen Elektromagneten (53, 54) gebildet sind, der mit einem einen (45) der Ventilsitze (43, 45) des Steuerventils (40) tragenden Ventilkolben (44) in kraftübertragender Verbindung steht.

4. Bremssystem nach einem der Ansprüche 1 bis 3 **dadurch gekennzeichnet, dass** der Wegsimulator (10) hydraulisch betätigbar ist.

5. Bremssystem nach einem der Ansprüche 1 bis 4 **dadurch gekennzeichnet, dass** der Wegsimulator (10) im Gehäuse (20) der Ansteuerungs- bzw. Betätigungseinrichtung (1) angeordnet ist.

6. Bremssystem nach Anspruch 5 **dadurch gekennzeichnet, dass** der Wegsimulator (10) parallel zur Längachse der Ansteuerungs- bzw. Betätigungseinrichtung (1) angeordnet ist.

7. Bremssystem nach Anspruch 5 **dadurch gekennzeichnet, dass** der Wegsimulator (10) senkrecht zur Längsachse der Ansteuerungs- bzw. Betätigungseinrichtung (1) angeordnet ist.

8. Bremssystem nach einem der Ansprüche 1 bis 4 **dadurch gekennzeichnet, dass** der Wegsimulator (10) im Steuergehäuse (55) des Steuerventils (40) angeordnet ist.

9. Bremssystem nach einem der Ansprüche 1 bis 7 **dadurch gekennzeichnet, dass** der Wegsimulator (10) bei einem Ausfall der elektromechanischen Mittel (41, 53, 44, 54) wirkungsmäßig abschaltbar ist.

10. Bremssystem nach einem der Ansprüche 1 bis 9 **dadurch gekennzeichnet, dass** das Steuerventil (40) koaxial zur Symmetrieachse des Bremskraftverstärkers (3) angeordnet ist.

11. Bremssystem nach einem der Ansprüche 1 bis 10 **dadurch gekennzeichnet, dass** das Steuerventil (40) parallel zur Symmetrieachse des Bremskraftverstärkers (3) angeordnet ist.

12. Bremssystem nach einem der Ansprüche 1 bis 11 **dadurch gekennzeichnet, dass** im Rückhaltekolben (13) eine hydraulische Druckkammer (14) ausgebildet ist, die einerseits der Erfassung einer am Bremspedal (9) wirkenden Betätigungskraft und andererseits der Betätigung des Wegsimulators (10) dient.

13. Bremssystem nach einem der Ansprüche 1 bis 12 **dadurch gekennzeichnet, dass** der Pedalwegsimulator (10) eine hydraulische Simulatorkammer (25), einen hydraulischen Simulatorkolben (26) sowie mindestens ein elastisches Element (27,28) aufweist, mit dem der Simulatorkolben (26) in kraftübertragender Verbindung steht.

14. Bremssystem nach Anspruch 13 **dadurch gekennzeichnet, dass** das mindestens eine elastische Element (27,28) durch eine Reihenschaltung einer metallischen Feder (27) und einer Elastomerfeder (28) gebildet ist.

15. Bremssystem nach einem der Ansprüche 1 bis 14 **dadurch gekennzeichnet, dass** der Pedalwegsimulator (10) im Steuergehäuse (55) des Steuerventils (40) angeordnet ist.

16. Bremssystem nach nach einem der Ansprüche 12 bis 14 **dadurch gekennzeichnet, dass** der Wegsimulator (10) durch eine Bewegung des Rückhaltekolbens (13) gegenüber dem Gehäuse (20) abschaltbar ist.

17. Bremssystem nach einem der Ansprüche 1 bis 13 **dadurch gekennzeichnet, dass** zwischen dem Hauptbremszylinderkolben (12) und dem Rückhaltekolben (13) ein Druckübersetzungskolben (16) vorgesehen ist.

18. Bremssystem nach einem der Ansprüche 1 bis 16 **dadurch gekennzeichnet, dass** ein Drucksensor (52) zum Erfassen des vom zweiten Hauptbremszylinder (36) gelieferten Druckes vorgesehen ist.

19. Bremssystem nach einem der Ansprüche 1 bis 17 **dadurch gekennzeichnet, dass** der zweite Hauptbremszylinder (36) gegenüber dem Gehäuse (30) des Bremskraftverstärkers (3) begrenzt bewegbar ausgebildet ist.

20. Bremssystem nach Anspruch 19 **dadurch gekennzeichnet, dass** das Gehäuse (58) des zweiten Hauptbremszylinders (36) als pneumatischer Kolben ausgebildet ist, der mit einer Druckdifferenz zwischen dem in der Unterdruckkammer (37) des Bremskraftverstärkers (3) herrschenden Druck und dem Atmosphärendruck beaufschlagbar ist.

21. Bremssystem nach Anspruch 19 oder 20 **dadurch gekennzeichnet, dass** zwischen dem Gehäuse (30) des Bremskraftverstärkers (3) und dem Gehäuse (58) des zweiten Hauptbremszylinders (36) ein Federelement (68) angeordnet ist, dessen Federkraft der durch die pneumatische Druckdifferenz auf den zweiten Hauptbremszylinder (36) ausgeübten Kraft entgegen wirkt.

22. Bremssystem nach einem der Ansprüche 18 bis 20 **dadurch gekennzeichnet, dass** das Gehäuse (58) und der Hauptzylinderkolben (39) des zweiten Hauptbremszylinders (36) als Bestandteile einer Ventilanordnung (65) ausgebildet sind, die in einer ersten Position des Gehäuses (58) gegenüber dem Gehäuse (30) des Bremskraftverstärkers (3), die der Wirkung der Druckdifferenz zwischen dem in der Unterdruckkammer (37) des Bremskraftverstärkers (3) herrschenden Druck und dem Atmosphärendruck entspricht, den Innenraum des zweiten Hauptbremszylinders (36) mit einem ihm zugeordneten drucklosen Druckmittelvorratsbehälter (59) verbindet und in einer zweiten Position des Gehäuses (58) gegenüber dem Gehäuse (30) des Bremskraftverstärkers (3), die einer fehlenden Wirkung der Druckdifferenz zwischen dem in der Unterdruckkammer (37) des Bremskraftverstärkers (3) herrschenden Druck und dem Atmosphärendruck entspricht, die Verbindung zwischen dem Innenraum des zweiten Hauptbremszylinders (36) mit dem ihm zugeordneten drucklosen Druckmittelvorratsbehälter (59) absperrt.

23. Bremssystem nach Anspruch 22 **dadurch gekennzeichnet, dass** die Ventilanordnung (65) durch im Gehäuse (58) des zweiten Hauptbremszylinders (36) sowie im Hauptzylinderkolben (39) ausgebildete Durchlässe (63,64) sowie ein im Gehäuse (58) des zweiten Hauptbremszylinders (36) angeordneten, mit dem Durchlass (64) im Hauptzylinderkolben (39) zusammenwirkenden Dichtelement (66) gebildet wird.

24. Bremssystem nach Anspruch 1 oder 2 **dadurch gekennzeichnet, dass** die elektromechanischen Mittel (41) mit einem Unterdruckdichtsitz (43) des Steuerventils (40) in kraftübertragender Verbindung stehen.

## Claims

1. Brake system for motor vehicle brake installations, which brake system
• has a first master brake cylinder (2) with at least one hydraulic pressure chamber which is delimited by a master cylinder piston (12) and to which is connected at least one wheel brake circuit (I, II),
• an activating or actuating arrangement (1) which is connected upstream of the master brake cylinder (2) and in the housing (20) of which is guided a control piston (11) which is coupled to a brake pedal (9),
• and a pneumatic-hydraulic brake force booster (3) which is arranged on the opposite side of the master brake cylinder (2),
• in which pneumatic-hydraulic brake force booster (3) are formed two pneumatic booster chambers (37,38) which are separated from one another by a movable wall (33) and which, in the event of a brake actuation, can be connected to sources at different pressures by a control valve (40) which can be hydraulically actuated by means of the movement of the control piston (11),
• and wherein a second master brake cylinder (36) is connected downstream of the brake force booster (3), the piston (39) of which second master brake cylinder (36) is connected in a force-transmitting manner to the movable wall (33) and delimits a second pressure chamber whose pressure acts on the first master brake cylinder (12) so as to boost the brake force, **characterized in that**
a) electromechanical means (41,44) are provided for activating the control valve (40) in a manner independent of the driver's wishes,
b) a retaining piston (13) is provided in the housing (20) of the activating or actuating arrangement (1), which retaining piston (13), together with the master brake cylinder piston (12), delimits an intermediate space (21) which can be acted on with the pressure set in the second master brake cylinder (36), with the pressurization of the intermediate space (21) loading the master brake cylinder piston (12) and the retaining piston (13) in opposite directions, with
c) the control piston (11) being guided in the retaining piston (13), and with
d) a pedal travel simulator (10) being provided which can be actuated by means of the movement of the control piston (11).

2. Brake system according to Claim 1, **characterized in that** the control valve (40) has a control housing (55) which is provided with a vacuum connection (47) and with an atmospheric connection (48).

3. Brake system according to Claim 1 or 2, **characterized in that** the electromechanical means (41, 53, 44, 54) are formed by an electromagnet (53, 54) which is connected in a force-transmitting manner to a valve piston (44) which supports one (45) of the valve seats (43, 45) of the control valve (40).

4. Brake system according to one of Claims 1 to 3, **characterized in that** the travel simulator (10) can be hydraulically actuated.

5. Brake system according to one of Claims 1 to 4, **characterized in that** the travel simulator (10) is arranged in the housing (20) of the activating or actuating device (1).

6. Brake system according to Claim 5, **characterized in that** the travel simulator (10) is arranged parallel to the longitudinal axis of the activating or actuating device (1).

7. Brake system according to Claim 5, **characterized in that** the travel simulator (10) is arranged perpendicular to the longitudinal axis of the activating or actuating device (1).

8. Brake system according to one of Claims 1 to 4, **characterized in that** the travel simulator (10) is arranged in the control housing (55) of the control valve (10).

9. Brake system according to one of Claims 1 to 7, **characterized in that** the travel simulator (10) can be deactivated in the event of a failure of the electromechanical means (41, 53, 44, 54).

10. Brake system according to one of Claims 1 to 9, **characterized in that** the control valve (40) is arranged coaxially with respect to the axis of symmetry of the brake force booster (3).

11. Brake system according to one of Claims 1 to 10, **characterized in that** the control valve (40) is arranged parallel to the axis of symmetry of the brake force booster (3).

12. Brake system according to one of Claims 1 to 11, **characterized in that** a hydraulic pressure chamber (14) is formed in the retaining piston (13), which hydraulic chamber (14) serves firstly for measuring an actuating force which acts on the brake pedal (9) and secondly for actuating the travel simulator (10).

13. Brake system according to one of Claims 1 to 12, **characterized in that** the pedal travel simulator (10) has a hydraulic simulator chamber (25), a hydraulic simulator piston (26) and at least one elastic element (27,28) to which the simulator piston (26) is connected in a force-transmitting manner.

14. Brake system according to Claim 13, **characterized in that** the at least one elastic element (27,28) is formed by a series connection of a metallic spring (27) and an elastomeric spring (28).

15. Brake system according to one of Claims 1 to 14, **characterized in that** the pedal travel simulator (10) is arranged in the control housing (55) of the control valve (40).

16. Brake system according to one of Claims 12 to 14, **characterized in that** the travel simulator (10) can be deactivated by means of a movement of the retaining piston (13) with respect to the housing (20).

17. Brake system according to one of Claims 1 to 13, **characterized in that** a pressure boosting piston (16) is provided between the master brake cylinder piston (12) and the retaining piston (13).

18. Brake system according to one of Claims 1 to 16, **characterized in that** a pressure sensor (52) for measuring the pressure delivered by the second master brake cylinder (36) is provided.

19. Brake system according to one of Claims 1 to 17, **characterized in that** the second master brake cylinder (36) is designed so as to be movable to a limited extent with respect to the housing (30) of the brake force booster (3).

20. Brake system according to Claim 19, **characterized in that** the housing (58) of the second master brake cylinder (36) is designed as a pneumatic piston which can be acted on with a pressure difference between the pressure prevailing in the vacuum chamber (37) of the brake force booster (3) and the atmospheric pressure.

21. Brake system according to Claim 19 or 20, **characterized in that** a spring element (68) is arranged between the housing (30) of the brake force booster (3) and the housing (58) of the second master brake cylinder (36), the spring force of which spring element (68) counteracts the force exerted by the pneumatic pressure difference on the second master brake cylinder (36).

22. Brake system according to one of Claims 18 to 20, **characterized in that** the housing (58) and the master cylinder piston (39) of the second master brake cylinder (36) are formed as constituent parts of a valve arrangement (65) which, in a first position of the housing (58) with respect to the housing (30) of the brake force booster (3), which first position corresponds to the action of the pressure difference between the pressure prevailing in the vacuum chamber (37) of the brake force booster (3) and atmospheric pressure, connects the interior space of the second master brake cylinder (36) to an associated unpressurized pressure medium reservoir (59), and in a second position of the housing (58) with respect to the housing (30) of the brake force booster (3), which second position corresponds to the elimination of the action of the pressure difference between the pressure prevailing in the vacuum chamber (37) of the brake force booster (3) and atmospheric pressure, blocks the connection of the interior space of the second master brake cylinder (36) to the associated unpressurized pressure medium reservoir (59).

23. Brake system according to Claim 22, **characterized in that** the valve arrangement (65) is formed by passages (63,64), which are formed in the housing (58) of the second master brake cylinder (36) and in the master cylinder piston (39), and by a sealing element (66) which is arranged in the housing (58) of the second master brake cylinder (36) and which interacts with the passage (64) in the master cylinder piston (39).

24. Brake system according to Claim 1 or 2, **characterized in that** the electronic means (41) are connected in a force-transmitting manner to a vacuum sealing seat (43) of the control valve (40).

## Revendications

1. Système de frein pour installation de freinage de véhicule automobile, qui présente :
- un premier cylindre principal de frein (2) qui présente au moins une chambre sous pression hydraulique délimitée par un piston (12) de cylindre principal et à laquelle au moins un circuit (I, II) de frein de roue est raccordé,
- un système (1) de commande et d'actionnement raccordé en amont du cylindre principal de frein (2) et dans le boîtier (20) duquel est guidé un piston pilote (11) accouplé à une pédale de frein (9) et
- un amplificateur pneumatique-hydraulique (3) de force de freinage disposé en aval du cylindre principal de frein (2),
- et dans lequel deux chambres pneumatiques d'amplification (37, 38) séparées l'une de l'autre par une paroi mobile (33) sont formées et peuvent lors de l'actionnement du frein être raccordées à des sources de pression différentes par une soupape pilote (40) qui peut être actionnée hydrauliquement par le déplacement du piston pilote (11),
- un deuxième cylindre principal de frein (36) dont le piston (39) communique avec la paroi mobile (33) de manière à transférer les forces et délimite un deuxième espace sous pression dont la pression agit pour amplifier la force de freinage sur le premier piston (12) du cylindre principal est raccordé en aval de l'amplificateur (3) de force de freinage,
**caractérisé en ce que**
a) des moyens électromécaniques (41, 44) sont prévus pour commander la soupape pilote (40) de manière indépendante de la volonté du conducteur et
b) **en ce que** dans le boîtier (20) du système (1) de commande et d'actionnement est prévu un piston de retenue (13) qui délimite avec le piston (12) du cylindre principal de frein un espace intermédiaire (21) sur lequel une pression commandée dans le deuxième cylindre principal de frein (36) peut agir, la pression appliquée sur l'espace intermédiaire (21) chargeant le piston (12) du cylindre principal de frein et le piston de retenue (13) dans des directions mutuellement opposées,
c) **en ce que** le piston pilote (11) est guidé dans le piston de retenue (13) et
d) **en ce qu'**un simulateur de course de pédale (10) qui peut être actionné par le déplacement du piston pilote (11) est prévu.

2. Système de frein selon la revendication 1, **caractérisé en ce que** la soupape pilote (40) présente un boîtier pilote (55) qui est doté d'un raccordement (47) à une dépression ainsi que d'un raccordement (48) à l'atmosphère.

3. Système de frein selon les revendications 1 ou 2, **caractérisé en ce que** les moyens électromagnétiques (41, 53, 44, 54) sont formés par un électro-aimant (53, 54) qui communique avec un piston de soupape (44) qui porte un siège (45) des sièges de soupape (43, 45) de la soupape pilote (40) de manière à transférer les forces.

4. Système de frein selon l'une des revendications 1 à 3, **caractérisé en ce que** le simulateur de course (10) peut être actionné hydrauliquement.

5. Système de frein selon l'une des revendications 1 à 4, **caractérisé en ce que** le simulateur de course (10) est disposé dans le boîtier (20) du dispositif (1) de commande et d'actionnement.

6. Système de frein selon la revendication 5, **caractérisé en ce que** le simulateur de course (10) est disposé parallèlement à l'axe longitudinal du dispositif (1) de commande et d'actionnement.

7. Système de frein selon la revendication 5, **caractérisé en ce que** le simulateur de course (10) est disposé perpendiculairement à l'axe longitudinal du dispositif (1) de commande et d'actionnement.

8. Système de frein selon l'une des revendications 1 à 4, **caractérisé en ce que** le simulateur de course (10) est disposé dans le boîtier pilote (55) de la soupape pilote (40).

9. Système de frein selon l'une des revendications 1 à 7, **caractérisé en ce que** le fonctionnement du simulateur de course (10) peut être débranché en cas de défaillance des moyens électromécaniques (41, 53, 44, 54).

10. Système de frein selon l'une des revendications 1 à 9, **caractérisé en ce que** la soupape pilote (40) est disposée co-axialement par rapport à l'axe de symétrie de l'amplificateur (3) de force de freinage.

11. Système de frein selon l'une des revendications 1 à 10, **caractérisé en ce que** la soupape pilote (40) est disposée parallèlement à l'axe de symétrie de l'amplificateur (3) de force de freinage.

12. Système de frein selon l'une des revendications 1 à 11, **caractérisé en ce qu'**une chambre hydraulique sous pression (14) qui sert d'une part à saisir la force d'actionnement qui agit sur la pédale de frein (9) et d'autre part à actionner le simulateur de course (10) est formée dans le piston de retenue (13).

13. Système de frein selon l'une des revendications 1 à 12, **caractérisé en ce que** le simulateur (10) de course de pédale présente une chambre hydraulique de simulation (25), un piston hydraulique de simulation (26) ainsi qu'au moins un élément élastique (27, 28) relié au piston de simulation (26) de manière à transférer les forces.

14. Système de frein selon la revendication 13, **caractérisé en ce que** le ou les éléments élastiques (27, 28) sont formés par le raccordement en série d'un ressort métallique (27) et d'un ressort (28) en élastomère.

15. Système de frein selon l'une des revendications 1 à 14, **caractérisé en ce que** le simulateur (10) de course de pédale est disposé dans le boîtier pilote (55) de la soupape pilote (40).

16. Système de frein selon l'une des revendications 12 à 14, **caractérisé en ce que** le simulateur de course (10) peut être débranché par rapport au boîtier (20) par un déplacement du piston de retenue (13).

17. Système de frein selon l'une des revendications 1 à 13, **caractérisé en ce qu'**un piston (16) de transfert de pression est prévu entre le piston (12) du cylindre principal de frein et le piston de retenue (13).

18. Système de frein selon l'une des revendications 1 à 16, **caractérisé en ce qu'**une sonde de pression (52) qui détecte la pression délivrée par le deuxième cylindre principal de frein (36) est prévue.

19. Système de frein selon l'une des revendications 1 à 17, **caractérisé en ce que** le deuxième cylindre principal de frein (36) est configuré de manière à pouvoir se déplacer de manière limitée par rapport au boîtier (30) de l'amplificateur (3) de force de freinage.

20. Système de frein selon la revendication 19, **caractérisé en ce que** le boîtier (58) du deuxième cylindre principal de frein (36) est configuré comme piston pneumatique sur lequel peut être appliquée la différence de pression entre la pression qui règne dans la chambre en dépression (37) de l'amplificateur (3) de force de freinage et la pression atmosphérique.

21. Système de frein selon les revendications 19 ou 20, **caractérisé en ce qu'**entre le boîtier (30) de l'amplificateur (3) de force de freinage et le boîtier (58) du deuxième cylindre principal de frein (36) est disposé un élément élastique (68) dont la force élastique s'oppose à la force exercée par la différence de pression pneumatique sur le deuxième cylindre principal de frein (36).

22. Système de frein selon l'une des revendications 18 à 20, **caractérisé en ce que** le boîtier (58) et le piston (39) de cylindre principal du deuxième cylindre principal de frein (36) sont configurés comme composants d'un système de soupapes (65) qui, lorsque le boîtier (58) est situé dans une première position par rapport au boîtier (30) de l'amplificateur (3) de force de freinage, position qui correspond à l'action de la différence de pression entre la pression qui règne dans la chambre en dépression (37) de l'amplificateur (3) de force de freinage et la pression atmosphérique, relie l'espace intérieur du deuxième cylindre principal de frein (36) à un récipient (59) de réserve de fluide sous pression qui lui est associé sans pression et, lorsque le boîtier (58) est situé dans une deuxième position par rapport au boîtier (30) de l'amplificateur (3) de force de freinage, position qui correspond à l'absence d'effet de la différence de pression entre la pression qui règne dans la chambre en dépression (37) de l'amplificateur (3) de force de freinage et la pression atmosphérique, bloque la liaison entre l'espace intérieur du deuxième cylindre principal de frein (36) et le récipient (59) de réserve de fluide sous pression qui lui est associé sans pression.

23. Système de frein selon la revendication 22, **caractérisé en ce que** le système de soupapes (65) est formé par des passages (63, 64) ménagés dans le boîtier (58) du deuxième cylindre principal de frein (36) ainsi que dans le piston (39) du cylindre principal ainsi que par un élément d'étanchéité (66) qui coopère avec le passage (64) ménagé dans le piston (39) du cylindre principal et disposé dans le boîtier (58) du deuxième cylindre principal de frein (36).

24. Système de frein selon les revendications 1 ou 2, **caractérisé en ce que** les moyens électromécaniques (41) sont reliés à un siège d'étanchéité en dépression (43) de la soupape pilote (40) de manière à transférer les forces.
